(19) **Europäisches Patentamt**

**European Patent Office**

**Office européen des brevets**

(11) **EP 0 343 608 B1**

(12) **EUROPEAN PATENT SPECIFICATION**

(45) Date of publication and mention
of the grant of the patent:
**08.03.2000 Bulletin 2000/10**

(51) Int. Cl.[7]: **H04Q 11/04**, H04Q 3/52

(21) Application number: **89109290.0**

(22) Date of filing: **23.05.1989**

(54) **Digital signal exchange equipment**

Vermittlungsanlagegerät für digitale Signale

Equipement de central pour signaux numériques

(84) Designated Contracting States:
**DE FR GB**

(30) Priority: **23.05.1988 JP 12512488**
**23.05.1988 JP 12512588**

(43) Date of publication of application:
**29.11.1989 Bulletin 1989/48**

(73) Proprietor:
**KABUSHIKI KAISHA TOSHIBA**
**Kawasaki-shi, Kanagawa-ken 210-8572 (JP)**

(72) Inventors:
• **Atsumi, Takehiko**
**Intellectual Prop. Div.**
**Minato-ku Tokyo 105 (JP)**
• **Shibagaki, Taro**
**Intellectual Prop. Div.**
**Minato-ku Tokyo 105 (JP)**
• **Ibe, Hiroyuki**
**Intellectual Prop. Div.**
**Minato-ku Tokyo 105 (JP)**
• **Ozeki, Takeshi**
**Intellectual Prop. Div.**
**Minato-ku Tokyo 105 (JP)**

(74) Representative:
**Henkel, Feiler, Hänzel**
**Möhlstrasse 37**
**81675 München (DE)**

(56) References cited:
**EP-A- 0 006 816**          **EP-A- 0 165 499**

• **PROCEEDINGS OF THE INTERNATIONAL SWITCHING SYMPOSIUM, May 7-11, 1984, Florence, IT, Session 23-C, Paper 1, pages 1-7, North-Holland, Amsterdam, NL; H. BAUCH et al.: "Architectural and technology aspects of broadband switching"**
• **IDEM**
• **NTG-FACHBERICHTE, Vorträge der NTG-Fachtagung, March 25-27,1985, pages 202-209, Berlin, DE; K.-D. LANGER et al.: "Konzeption und Realisierung eines Breitband-Koppelnetzes für 70Mbit/s"**
• **IBM TECHNICAL DISCLOSURE BULLETIN, vol. 24, no. 3, August 1981, page 1761, New York, US; S.C. SULLIVAN et al.: "High density multiplexed polarity hold latch"**
• **PATENT ABSTRACTS OF JAPAN, vol. 12, no. 111, (E-598)(2958), April 8, 1988; & JP-A-62 239 699 (FUJITSU LTD.) 20-10-1987**
• **PATENT ABSTRACTS OF JAPAN, vol. 10, no. 50 (E-384)(2107), February 27, 1986, & JP-A-60 201 795 (NIPPON DENSHIN DENWA KOSHA) 12-10-1985**
• **IBM TECHNICAL DISCLOSURE BULLETIN, vol. 28, no. 3, August 1985, pages 1302-1304, New york, US; "CMOS self-decoding complementary pass gate multiplexer"**
• **PROCEEDINGS OF THE INTERNATIONAL SWITCHING SYMPOSIUM, May 7-11, 1984, Florence, IT; Session 31-C, Paper 3, pages 1-6; North-Holland Publishing Comp., Amsterdam, NL; C. DURET et al.: "Integrated crosspoint technology for wide band space division switching networks"**

- **COMPUTER, vol. 20, no. 6, June 1987, pages 3-40, New York, US; V.P. KUMAR et a.:** **"Augmented shuffle-exhange multistage interconnection networks"**

## Description

The present invention relates to a digital signal exchange equipment for connecting a plurality of digital signal input circuit lines to an arbitory circuit line of a plurality of output circuit lines and to a circuit line selection control apparatus for selectively controlling a circuit line connection and for preventing a connection error at an exchange time.

In general, a digital signal exchange equipment for performing an exchange of a fast and continuous digital signal, such as an image PCM signal used, for example, at a broadcasting station comprises a matrix array of switching elements each provided at a crosspoint of each input line with a corresponding output line, or at a crosspoint of each output line with a corresponding input line, with the input and output lines connected to input and output circuit lines, respectively, as a lattice-like structure. In this matrix array, any input circuit line can be connected to any output circuit line by making a selective, switching connection to a predetermined switching element.

A matrix type unit for controlling a crosspoint connection by the switching element requires a very large number of switching elements with an increase in the circuit lines and, furthermore, the switching of the switching elements is very complex to control. Since, in this case, an input digital signal has to be passed through a great many of switching elements until it is output from the exchange equipment, it is not possible to, due to a high-speed requirement for a digital signal to be transferred, disregard a delay of that signal when it passes through the switching elements. As the switching elements, use may be made of electronic switches (semiconductor switches) in which case the signal passage characteristics of this type of switches are generally not equal in terms of the delay of a signal at a time of a rise and a fall. For this reason, the input digital signal suffers a deformation with respect to time, each time it passes through the switching element, so that it has a very great deformation. This causes a difficulty in a signal identification.

As a general countermeasure against this situation, a method may be adopted which achieves the synchronization and waveform-shaping of such digital signal by a flip-flop each time that signal passes through the switching element at the crosspoint. If, however, this method is applied to an exchange equipment having a simple matrix array as set forth above, a great number of flip-flops are required in the case where many circuit lines are involved. This system dissipates more electric power and is difficult to implement because of many flip-flops involved, failing to offer any practical countermeasure.

On the other hand, a circuit line selection control apparatus used in the conventional exchange equipment performs a selective switching among the many circuit lines in a time-division fashion and dynamically monitors the switching elements so that a connection error may be prevented. In the time-division exchange system, however, the select signal is multiplexed in a time-division fashion to conform to the characteristic of the digital signal transmitted and then input to the exchange equipment. In the treatment of a fast, continuous digital signal, such as an image PCM signal, the bit rate of the select signal after being multiplexed becomes an extremely high level. It is, therefore, not easy to implement such a system. The error connection preventing means works under dynamical control of the switching element, only after a switch connection has been achieved, and it is not preferable that it be employed for such a purpose.

As set forth above, the conventional digital signal exchange equipment involves a high-speed requirement for transmitted digital signals as well as an increase in a signal delay among the circuit lines resulting from a large increase in the number of circuit lines. It is thus difficult to meet the high-speed requirement for digital signals as well as an increase in the number of circuit lines. Since the conventional circuit selection switching apparatus performs a selective switching among circuit lines, it is not easy to achieve it as a practical apparatus due to an extremely high bit rate of the select signal. Indeed in spite of the dynamic monitoring of the switches, the apparatus works only after a switch connection is achieved, failing to be manufactured as a fully practical apparatus.

Document EP-A-0 165 499 discloses a signal exchange equipment which is responsive to external select signals to switch a number of input circuit lines to a number of output circuit lines. In this equipment there are provided a number of selector modules having first and second input lines as well as output lines. The selector modules are formed into groups, whereby the output lines of each selector module are partly connected to output circuit lines and partly connected to extended inputs of another selector module within the same group.

An object of the present invention is to provide a digital signal exchange equipment which is simple in arrangement, easy in the control of a switching among circuit lines, uniform in a signal delay time among the circuit lines and can fully suppress deformation caused during a signal transmission whereby it is readily possible to achieve a high-speed requirement for transmitted digital signals as well as an increase in the number of circuit lines.

According to the present invention there is provided a digital signal exchange equipment responsive to external select control signals to selectively connect K X N (K, N: a natural number) input circuit lines to L X M (L, M: a natural number) output circuit lines, which comprises:

    K X L selector modules arranged in a matrix array and each having N first input lines, M second input lines, and M output lines assigned to the second input lines, for causing each output line to be selectively connected to one of the first and corresponding second input lines according to the external select control signals;

K input buses, each of which has N bus lines connected to N corresponding input circuit lines of the K X N input circuit lines, and supplies the digital signals to the first input lines of the selector modules in a corresponding row;

K X L extended buses, each having M bus lines and arranged to connect the M output lines of a selector module in each row and each column to the M second input lines of a selector module in a corresponding next row and the same column, the M output lines of a selector module in a last row and each column to the M second input lines of a selector module in a first row and a corresponding next column, and M output lines of a selector module in the last row and a last column to the second input lines of a selector module in the first row and a first column;

L output buses each having M bus lines and arranged to connect the M output lines of a selector module in the last row and each column to M corresponding output circuit lines of the L X M output circuit lines, for supplying the digital signals output from the selector modules to the output circuit lines; and

select control lines supplying means for supplying the select control signals to the K X L selector modules.

This invention can be more fully understood from the following detailed description wen taken in conjunction with the accompanying drawings, in which:

Figs. 1 to 6 are views showing a digital signal exchange equipment according to one embodiment of the present invention;

Fig. 1 is a block circuit diagram showing a whole circuit arrangement of the digital signal exchange equipment, excluding a control system;

Fig. 2 is a view showing a selector module of Fig. 1 and input/output signals for the selector module;

Fig. 3 is a block circuit diagram showing a detailed circuit of a gate array in the selector module shown in Fig. 2;

Fig. 4 is a block circuit diagram showing an inner circuit of the selector module of Fig. 2;

Fig. 5 is a logic circuit diagram showing a detailed arrangement of the gate array shown in Fig. 3;

Fig. 6 is a logic circuit diagram showing a 2×11 gate which is used for a gate array shown in Fig. 3;

Figs. 7 to 9 are views showing a selection switching control apparatus according to another embodiment of the present invention;

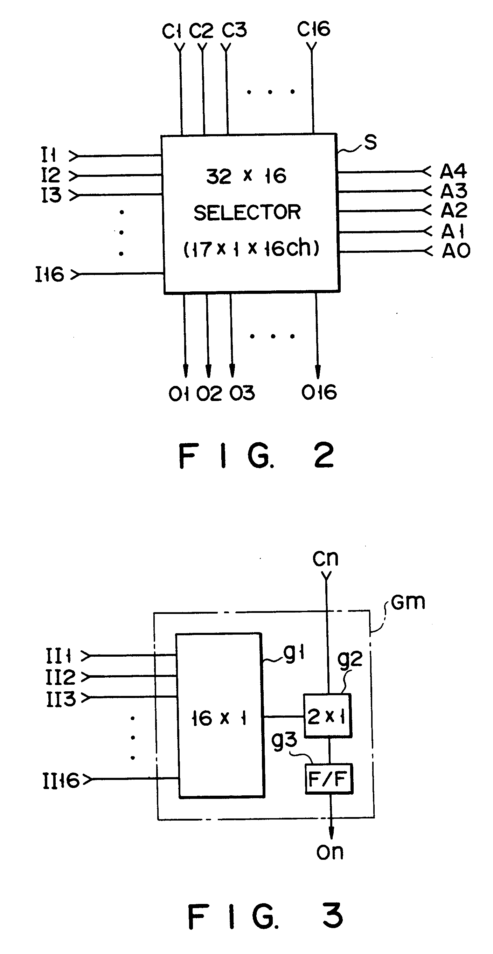

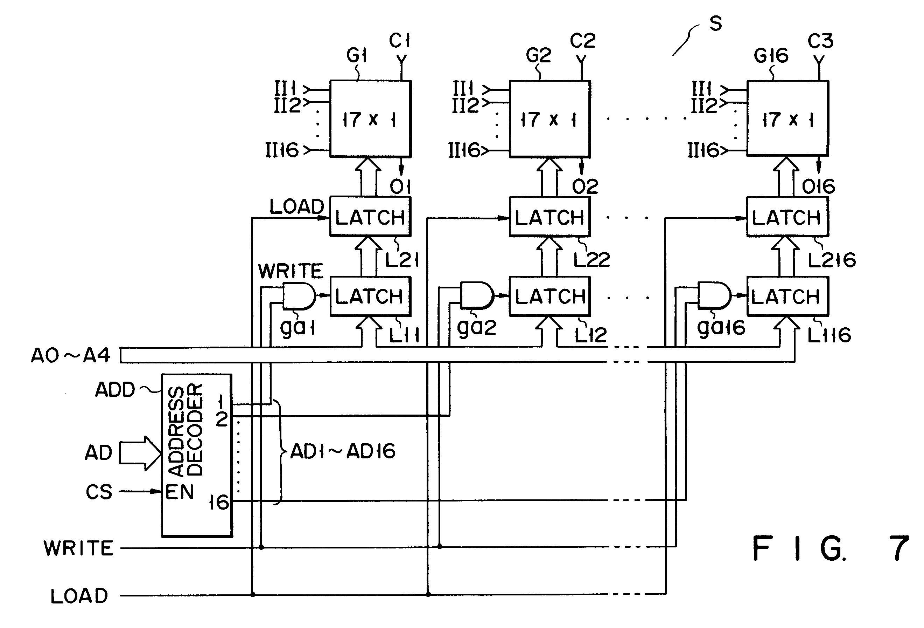

Fig. 7 is a block circuit diagram showing a circuit arrangement of a control system of the selector module shown in Fig. 3;

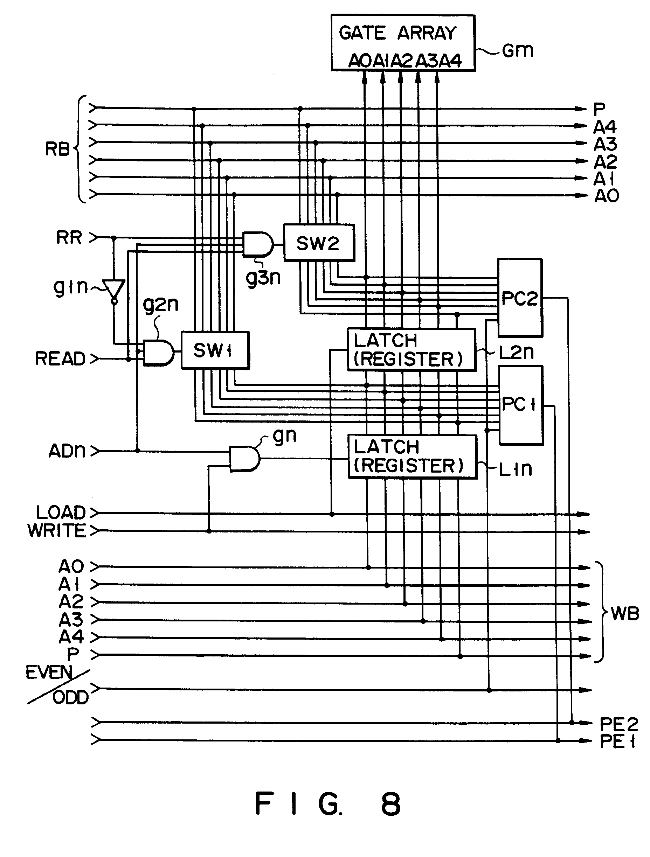

Fig. 8 is a block circuit diagram showing a circuit arrangement of a checking circuit arrangement suitable for a control system of Fig. 7; and

Fig. 9 is a logic circuit diagram showing an arrangement of a parity checking circuit arrangement of Fig. 8.

An embodiment of the present invention will be explained below with reference to the accompanying drawings.

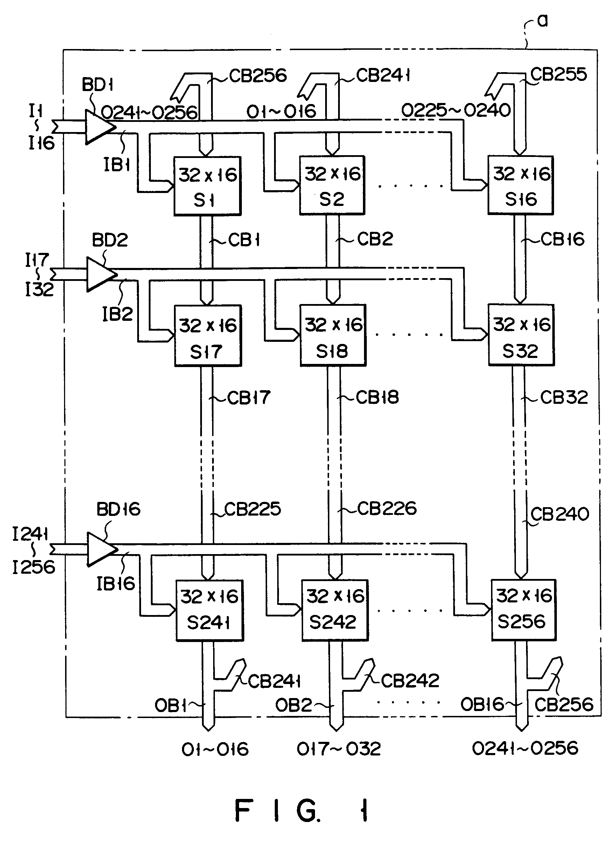

First, a digital signal exchange equipment according to one embodiment of the present invention will be explained below with reference to Figs. 1 to 6.

Fig. 1 shows a whole arrangement of a 16×16-input/16×16-output type digital signal exchange equipment according to the present invention, noting that, here, a control system is omitted.

In the arrangement shown in Fig. 1, $S_1$ to $S_{256}$ denote selector modules which constitute a 32-input/16-output (hereinafter referred as 32×16) type IC device having 16 inputs in a column direction and 16 outputs in a row direction. The IC device is formed, as a 16-columnx16-row array, on a substrate a. $IB_1$ to $IB_{16}$ show internal input buses which are provided to correspond to respective 16 circuit lines of 16×16 circuit lines of external input terminals, not shown. Digital signals which are input to external input terminals of respective 16 circuit lines are transmitted, respectively through bus drivers $BD_1$ to $BD_{16}$, to 16 selector modules $S_1$ to $S_{16}$, $S_{17}$ to $S_{32}$, ..., $S_{241}$ to $S_{256}$ on respective columns.

$CB_1$ to $CB_{240}$ denote internal common buses and transmit 16 outputs of selector modules $S_\ell$ to $S_{16\ell}$ on a $\ell$-th column to 16 inputs of selector modules $S_{\ell+1}$ to $S_{16(\ell+1)}$ on an $(\ell+1)$th column, noting that $\ell$ denotes a natural number of 1 to 15. $CB_{241}$ to $CB_{256}$ are internal common buses and transmits 16 outputs of the selector modules $S_{241}$ to $S_{256}$ on the 16-th column to 16 inputs of selector modules $S_2$ to $S_{16}$ on the next column, noting that $CB_{256}$ denotes an initial row. $OB_1$ to $OB_{16}$ are internal output buses and transmit 16 outputs of selector modules $S_{241}$ to $S_{256}$ on the column to corresponding external output terminals, not shown, of 16×16 circuit lines.

An interface for control signal inputting/outputting, as well as a control bus for making a connection between the interface and the respective selector modules $S_1$ to $S_{256}$, is provided on the substrate a, though not shown in Fig. 1. The interface is connected to a host computer, not shown, and the respective selector mod-

ules $S_1$ to $S_{256}$ are selectively controlled by the host computer.

That is, in the digital signal exchange equipment so arranged, the digital signal inputs $I_1$ to $I_{256}$ 16×16 circuit lines are divided into 16 sections and are connected respectively through buffer drivers $BD_1$ to $BD_{16}$ to the internal input buses $IB_1$ to $IB_{16}$. The input digital signals of the internal input buses $IB_1$ to $IB_{16}$ are transmitted to the selector modules $S_1$ to $S_{16}$, $S_{17}$ to $S_{32}$, ..., $S_{241}$ to $S_{256}$.

The respective selector modules $S_1$, ..., $S_{256}$ are arranged such that the input lines on the respective column are connected, in an normal state, to the corresponding output lines on the same column. When the input and output lines on the column are designated by a control signal which is input via the control bus, the corresponding designated lines are selected for connection. A digital signal on the output line of a column is output to an outside via the internal output bus line of the same column, unless the first-mentioned line is selected by the other selector.

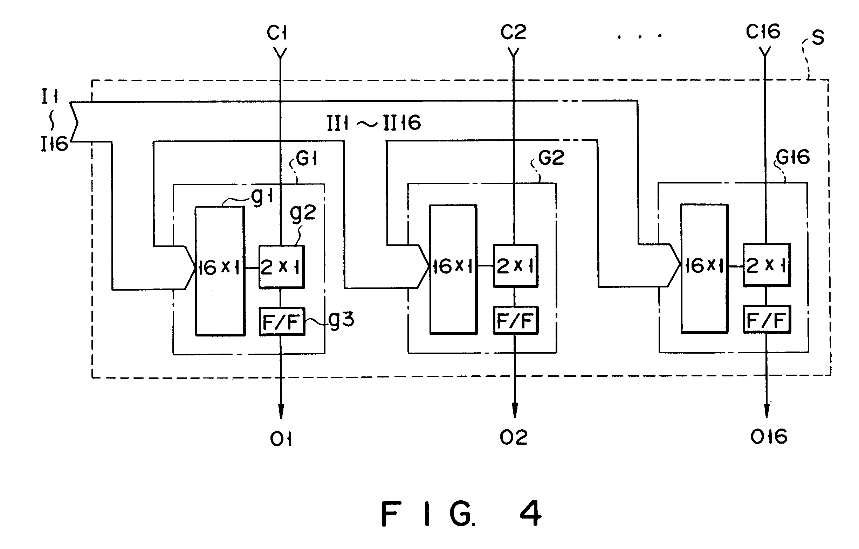

Fig. 2 shows a detail of the 32×16 selector modules S where $I_1$ to $I_{16}$, $C_1$ to $C_{16}$, $O_1$ to $O_{16}$, and $A_0$ to $A_4$ denote internal input bus lines, internal common bus lines, internal output bus lines, and control bus lines, respectively. The selector module S is of such a type that gate arrays Gm (m = 1 to 16) as shown in Fig. 3 are constructed of a parallel array of 16 gates on the column as shown in Fig. 4 where the input terminals of the respective gate arrays are connected to the internal input bus lines $I_1$ to $I_{16}$ via input bus lines $II_1$ to $II_{16}$ in the selector module S.

As shown in Fig. 3, the gate array Gm comprises a first 16×1 gate g1 for selecting one of the input bus lines $II_1$ to $II_{16}$, a second 2×1 gate g2 for selecting one of an output line of the first gate g1 and internal common bus line Cn (n: a natural number of 1 to 16) and connecting it to the internal output bus line On, and a timing circuit g3 constructed of a flip-flop (F/F) and adapted to obtain a coincidence output timing among the respective arrays $G_1$ to $G_{16}$.

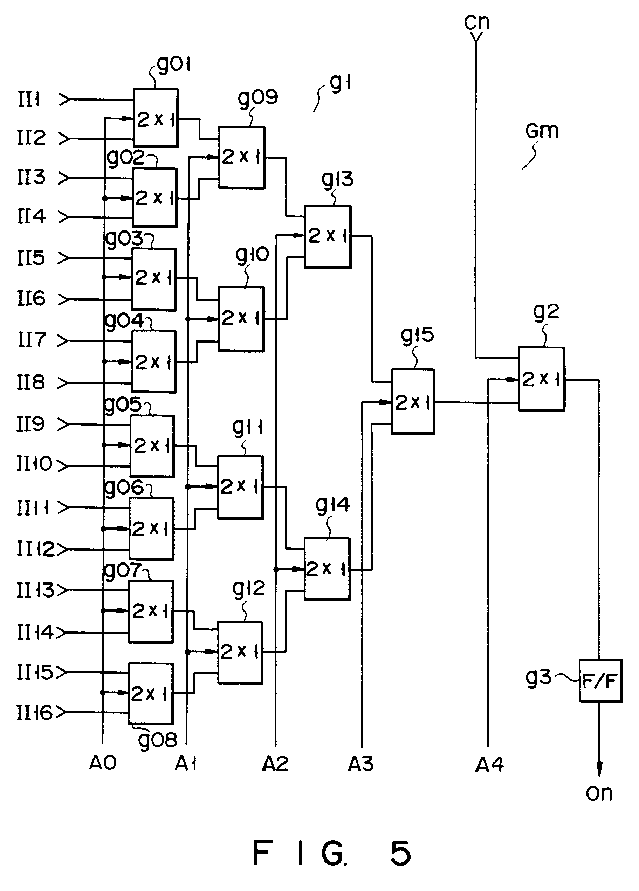

The detailed arrangement of the gate array Gm will be explained below with reference to Fig. 5. The first 16×1 gate g1 constitutes a tree-like array of 2×1 gates g01 to g15 with eight 2×1 gates g01 to g08 at a first stage, four 2×1 g09 to g12 at a second stage, two 2×1 gates g13 and g14 at a third stage and one 2×1 gate g15 at a fourth stage. The respective gates g01 to g08, g09 to g12, g13 to g14 and g15 are selectively controlled by select signals $A_0$, $A_1$, $A_2$ and $A_3$, respectively.

Of the input bus lines $II_1$ to $II_{16}$ connected to the first gate g1, eight lines are selected by the gates g01 to g08 at the first gate, four lines are selected by the gates g09 to g12 at the second gate, two lines are selected at the third gates g13 and g14 and one line is selected by the gate g15 at the fourth gate. In this way, the output of the first gate g1 is connected to the input of the second 2×1 gate g2.

Here, the respective gates g01 to g15 are so constructed that, for example, the upper lines are selected when a select signal is "0" and the lower lines in Fig. 5 are selected when the select signal is "1". In order to select an input bus line $II_n$, it is only necessary that a value of (n-1)2 in binary notation be applied to the select signal of the control bus lines $A_0$ to $A_3$. If, for example, $II_{07}$ is to be selected, it is only necessary to put a select signal $(A3A2A1A0)_2$ as $(0110)2$ (= (7-1)10). It is thus easy to set any select signal by establishing the aforementioned relation.

The second gate g2 is controlled by a select signal coming from the control bus lines $A_4$ and selects an output line of the first gate g1 when $A_4$ = "1" and an internal common bus line Cn when $A_4$ = "0".

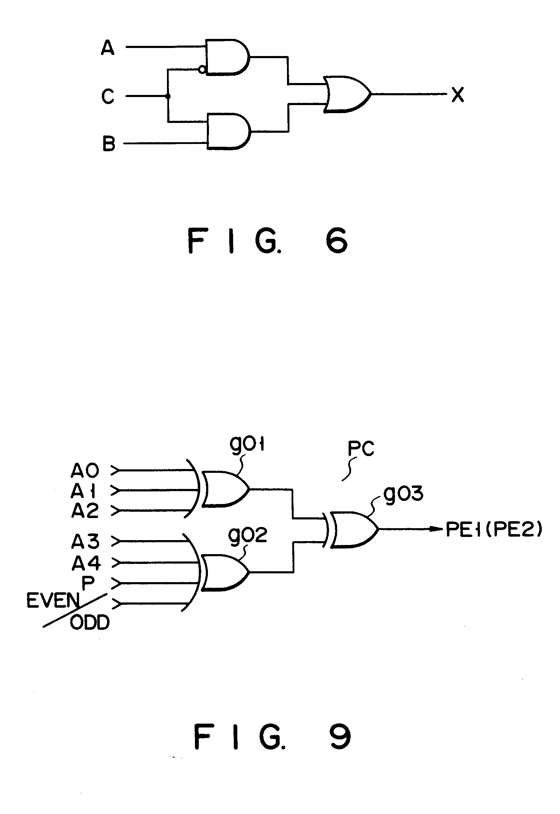

The 2×1 gates g01 to g15 and g2 can be implemented by a logic circuit as shown in Fig. 6. In an arrangement shown in Fig. 6, A, B denote a digital signal input line; C, a control signal input line; and X, a digital signal output line. The aforementioned logic circuit implements

$$X = (A * \overline{C}) + (B * C).$$

That is, A is selected at an AND gate AND1 when C = 0 and B is selected at an AND gate AND2 when C = 1 in which case the selected signal is taken out as X via an OR gate OR.

If, as set forth above, the gate array Gm is constructed with the 2x1 gate as a fundamental element, the input signal can pass through the gates with an equal number of gate passages to obtain ready synchronization and ready selection control can be achieved with 5-bit select signals ($A_0$ to $A_4$).

Fig. 7 shows an arrangement of a control system for the aforementioned selector modules S. A control bus which is connected to the module S is constituted by the aforementioned five-bit select signal ($A_0$ to $A_4$), 4-bit address data AD, chip select signal cs, write instruction signal WRITE and load instruction signal LOAD.

On the other hand, a control system comprises, for the respective gate array Gm, first and second latch circuits L1n and L2n and AND gates gan and address decoder ADD.

A bus line of a 4-bit address data AD and chip select signal cs is connected to the address decoder ADD, and a bus line of an n channel output ADn of the address decoder ADD and write instruction signal WRITE is connected to the AND gate gan. The 5-bit bus line of the select signals $A_0$ to $A_4$ and output line of the AND gate gan are connected to the first latch circuit L1n; the 5-bit output line of the first latch circuit L1n and a bus line of a load instruction signal LOAD are connected to a second latch circuit L2n; and a 5-bit output terminal of the second latch circuit L2n is connected to a control bus of the respective gate array Gm.

That is, the aforementioned address decoder ADD is initiated upon receipt of a chip select signal cs and receives the 4-bit address data AD to identify which gate array Gm is designated, and transmits a designation signal ADn to the AND gate gan of the designated gate array Gm.

Upon receipt of the designated signal ADn, the AND gate gan supplies a write instruction signal WRITE to the first latch circuit L1n. The first latch circuit L1n receives the select signals $A_0$ to $A_4$. When it receives a write instruction signal WRITE, and holds them until it receives the next write instruction signal WRITE. Upon receipt of a load instruction signal LOAD, the second latch circuit L2n receives a latch output of the first latch circuit L1n and transmits it to the gate array Gm until the next instruction signal LOAD is received. By so doing, it is possible to make the first latch circuit L1n in a "freely writable" state and hold the next select signal for the respective gate array Gm.

The digital signal exchange equipment thus arranged includes a combination of IC selector modules and can readily cope with an increase in their circuit lines. Furthermore, the exchange equipment allows the use of a simpler control system since it is possible to perform control per module. At the same time, since the respective modules are switchingly controlled by the output of the latch circuit and since the synchronization, as well as the shaping of a waveform, is achieved by the flip-flop circuit in the respective module, a circuit-to-circuit delay time becomes uniform and any possible deformation as generated during a signal transmission can be reduced to a satisfactory extent. As a result, adequate preparation can readily be made for the use of a high-speed digital signal as well as an increase in the circuit lines.

In the digital signal exchange equipment, there is a possibility that if an error signal is latched to the first and second latch circuit L1n and L2n due to some cause, such as a noise, a connection error will arise relative to the input and output circuit lines in the selector modules S. As a general way of monitoring such a connection error, use may be made of a scanning system which sequentially reads "held data" out of the control register (latch circuits L1n, L2n) in the respective module and ascertains whether or not normal control data is stored. Since, in this scanning system, the number of control registers for storing control information is increased with an increase in the size of the signal exchange equipment, a lot of time is taken to read the information out of all the control registers in a sequence. It also takes a lot of time to respond to any abnormality, if any. A checking mechanism is, therefore, required to ascertain whether or not a correct select signal is latched to the latch circuit (L1n, L2n), that is the control register.

Fig. 8 shows an arrangement of a checking circuit arrangement for the circuit line selection control apparatus of the present invention which is provided to meet the aforementioned need. The checking circuit arrangement is provided for the respective gate array Gm. In the arrangement shown in Fig. 8, identical reference numerals are employed to designate parts or elements corresponding to those shown in Fig. 7 and different parts or sections will be explained below.

To the aforementioned control bus are connected bus lines of a parity signal P, even/odd designation signal EVEN/ODD, read instruction signal READ and read switching signal RR, 6-line read output bus RB and write output bus WB ($A_0$ to $A_4$, P control bus lines) and bus lines for parity error signals $PE_1$, $PE_2$. The read output bus RB, write output bus WB and respective buses of the parity error signals $PE_1$, $PE_2$ are connected via their interface to an external host computer. In this connection, it is to be noted that the read output bus RB and write output bus WB may be provided as a single shared bus because a write and a read operation are not performed simultaneously.

A 6-bit register is employed for the first and second latch circuits L1n and L2n. The first latch circuit L1n receives a write instruction signal from an AND gate gn and holds not only select signals $A_0$ to $A_4$ but also a parity signal P. The held signals $A_0$ to $A_4$ and P are output to a second latch L2n, first parity check circuit $PC_1$ and switch circuit $SW_1$. Upon receipt of a load instruction signal LOAD, the second latch circuit L2n supplies the output signals $A_0$ to $A_4$, P to the first latch circuit L1n to the second parity check circuit $PC_2$ and second read switch circuit $SW_2$, and only select signals $A_0$ to $A_4$ are fed to a gate array Gm.

The first and second parity circuits $PC_1$ to $PC_2$ are of the same type and are constructed as shown, for example, in Fig. 9. In the arrangement shown in Fig. 9, g01 to g03 denote exclusive OR gates (hereinafter referred to as EX-OR gates) in which case signals $A_0$ to $A_2$ are supplied to the gate g01, signals $A_3$, $A_4$, P and EVEN/ODD are supplied to the gate g02 and the outputs of the gates g01 and g02 are supplied to the gate g03. In Fig. 9, the EX-OR gates g01 and g02 are indicated as having three and four inputs, respectively, showing that the 2-input EX-OR gates are multi-connected to obtain the gates g01 and g02.

The even/odd designation signal EVEN/ODD determines whether a parity signal is set as an even parity or an odd parity. The parity signal P is determined based on the even/odd designation signal EVEN/ODD. For example, at $A_0$ to $A_4$ ="00101" and EVEN/ODD = 1, a parity signal P becomes "0". If the output $PE_1$ (or $PE_2$) of the EX-OR gate g03 becomes "1", an error is detected and a detected output is supplied to a host computer via the bus line ($PE_1$, $PE_2$).

The read instruction signal READ and read switching signal RR select the first and second read switch circuits $SW_1$ and $SW_2$ via the gates g1n to g3n, and the outputs of the switch circuits $SW_1$ and $SW_2$ are fed to the read output bus RB. For example, at READ = "1" and RR = "0", the outputs of the gates g1n, g2n and g3n become "1", "1" and "0", respectively, turning the first read switch circuit $SW_1$ ON and the second read switch $SW_2$ OFF. The outputs $A_0$ to $A_4$, P of the first latch circuit L1n are read onto the output bus RB. When RR = 1, the outputs of the gates g1n, g2n and g3n become "0", "0" and "1", respectively, turning the first read switch circuit $SW_1$ OFF and the second read switch circuit $SW_2$ ON. The outputs $A_0$ to $A_4$, P of the second latch circuit L2n are read onto the output bus RB.

That is, in the aforementioned control system, the select signals $A_0$ to $A_4$ and parity signal are sent to the latch circuit L1n and L2n. The respective outputs of the latch circuits L1n and L2n are parity-checked and, if an error occurs, error signals $PE_1$, $PE_2$ are sent to the host computer. It is thus possible to immediately ascertains whether or not right select signals are held in the respective latch circuits L1n and L2n and to, if an error occurs, implement an interrupt processing for data preservation to be made by the host computer. Upon receipt of the read instruction signal READ and read switching signal RR, the first and second latch circuits L1n and L2n send the respective outputs $A_0$ to $A_4$, P to the read output bus RB as set forth above and from there onto the host computer. By so doing, the host computer can sequentially monitor the memory contents in all of the latch circuits, thereby largely reducing a response time from the generation of an error to a corresponding action to be taken.

Thus the circuit line selection switching control apparatus having the aforementioned checking circuit arrangement can readily and positively provide a protection against a connection error between the circuit lines.

**Claims**

1. A digital signal exchange equipment responsive to external select control signals (A0 to A4) to selectively connect K X N (K, N: a natural number) input circuit lines (I1 to I256) to L X M (L, M: a natural number) output circuit lines (O1 to O256), comprising:

   K X L selector modules (S1 to S256) arranged in a matrix array and each having N first input lines (I1 to I16), M second input lines (C1 to C16), and M output lines (O1 to O16) assigned to the second input lines (C1 to C16), for causing each output line (O1 to O16) to be selectively connected to one of the first and corresponding second input lines (I1 to I16, C1 to C16) according to the external select control signals (A0 to A4);
   K input buses (IB1 to IB16), each of which has N bus lines connected to N corresponding input circuit lines of the K X N input circuit lines, and supplies the digital signals to the first input-lines of the selector modules (S1 to S256) in a corresponding row;
   K X L extended buses (CB1 to CB256), each having M bus lines and arranged to connect the M output lines (O1 to O16) of a selector module (S1 to S256) in each row and each column to the M second input lines (C1 to C16) of a selector module (S17 to S256) in a corresponding next row and the same column, the M output lines (O1 to O16) of a selector module (S241 to S256) in a last row and each column to the M second input lines (C1 to C16) of a selector module (S1 to S16) in a first row and a corresponding next column, and M output lines (O1 to O16) of a selector module (S256) in the last row and a last column to the second input lines (C1 to C16) of a selector module (S1) in the first row and a first column;
   L output buses (OB1 to OB16) each having M bus lines and arranged to connect the M output lines of a selector module (S241 to S256) in the last row and each column to M corresponding output circuit lines of the L X M output circuit lines (O1 to O256), for supplying the digital signals output from the selector modules (S241 to S256) to the output circuit lines; and
   select control lines supplying means for supplying the select control signals to the K X L selector modules (S1 to S256).

2. The digital signal exchange equipment according to claim 1, further including in each of the K X L selector modules (S1 to S256):

   N first internal input lines (II1 to II16) arranged in parallel with each other and connected to the N first input lines (I1 to I16),
   M basic selection circuits (G1 to G16), each having a second internal input line connected to one of the M second input lines (C1 to C16), an internal output line connected to one of the M output lines (O1 to O16), a first selection section (g1) for selecting that one of the N first internal input lines (II1 to II16) which is designated in a tournament fashion according to a first select signal (A0 to A3) of the select control signals (A0 to A4), and a second selection section (g2) for selecting that one of the first internal input line selected by the first selection section (g1) and the second internal input line which is designated by a second select signal (A4) of the select control signals (A0 to A4) and connecting the selected line to the internal output line, and
   select signal supplying means (ADD, L11 to L116, L21 to L216, ga1 to ga16) for separating the select control signals from the select control signal supplying means into first and second select signals and supplying the first and second select signals to the first and second selection sections (g1, g2) of the M basic selection circuits (G1 to G16), respectively.

3. The digital signal exchange equipment according to claim 2, further including in each of the K X L selector modules (S1 to S256):

synchronizing means (g3) for causing the digital signals derived from the M basic selection circuits (G1 to G16) to the output line (O1 to O16) to be synchronized with each other.

4. The digital signal exchange equipment according to claim 3, further including in said synchronizing means (g3) of the K X L selector modules (S1 to S256):

flip-flops (F/F) interposed in the output lines (O1 to O16) of said M basic selection circuits (G1 to G16) and driven by a same clock.

5. The digital signal exchange equipment according to claim 2, wherein said first selection section (g1) of said basic selection circuits (G1 to G16) is constituted by a combination of selection elements (g01 to g15) having a pair of inputs and a single output.

6. The digital signal exchange equipment according to claim 1, wherein said selector modules (S1 to S256) are formed as an integrated circuit device.

7. The digital signal exchange equipment according to claim 2, further including in the select signal supplying means of said selector modules (S1 to S256):

M first latch circuits (L11 to L116) assigned to the M basic selection circuits (G1 to G16), for holding the first and second select signals supplied to the M basic selection circuits (G1 to G16), and
M second latch circuits (L21 to L256) assigned to said M basic selection circuits (G1 to G16) and M first latch circuits (L11 to L116), each for holding the first and second select signals (A0 to A4) from a corresponding one of the first latch circuits (L11 to L116) to supply the held first and second select signals (A0 to A4) to a corresponding one of the basic selection circuits (G1 to G16).

8. The digital signal exchange equipment according to claim 2, further including in the select signal supplying means of the selector modules (S1 to S256):

control signal generating means (PC) for receiving the first and second select signals (A0 to A4) of the select control signals supplied from said select control signal supplying means as a parallel bit signal, generating a parity bit signal (P) from the parallel bit signal, and combining the parity bit signal with the first and second select signals (A0 to A4) to obtain a control signal;
M first latch circuits (L11 to L116) assigned to the M basic selection circuits (G1 to G16), for holding control signals (A0 to A4, P) supplied from the control signal generating means (PC) to the basic selection circuits (G1 to G16);
M second latch circuits (L21 to L216) assigned to the M basic selection circuits (G1 to G16) and M first latch circuits (L11 to L116), for holding the control signals from the first latch circuits (L11 to L116) at a same timing, and delivering the first and second select signals (A0 to A4) to the corresponding basic selection circuits (G1 to G16);
M first parity calculation circuits (PC1) for performing a parity checking on the basis of the control signals (A0 to A4, P) held by the first latch circuits (L11 to L116) and delivering a parity error signal (PE1) when an error is detected at a time of parity checking; and
M second parity calculation circuits (PC2) for performing a parity checking on the basis of the control signals (A0 to A4, P) held by the second latch circuits (L21 to L216) and delivering a parity error signal (PE2) when an error is detected at a time of parity checking; and
wherein said select signal supplying means is arranged to receive parity error signals (PE1, PE2) obtained from the first and second parity calculation circuits (PC1, PC2) and supply the first and second select signals (A0 to A4) to a corresponding basic selection circuit again.

**Patentansprüche**

1. Eine Digitalsignalaustauscheinrichtung, die auf externe Auswahlsteuersignale (A0 bis A4) anspricht, um K X N (K, N: eine natürliche Zahl) Eingangsschaltungsleitungen (I1 bis I256) mit L X M (L, M: eine natürliche Zahl) Ausgangsschaltungsleitungen (O1 bis O256) selektiv zu verbinden, mit folgenden Merkmalen:

K X L Selektormodule (S1 bis S256), die in einem Matrix-Array angeordnet sind und jeweils N erste Eingangsleitungen (I1 bis I16), M zweite Eingangsleitungen (C1 bis C16) und M Ausgangsleitungen (O1 bis O16), die den zweiten Eingangsleitungen (C1 bis C16) zugeordnet sind, aufweist, zum Veranlassen, daß jede Ausgangsleitung (O1 bis O16) selektiv mit einer der ersten und entsprechenden zweiten Eingangsleitungen (I1 bis I16, C1 bis C16) gemäß den externen Auswahlsteuersignalen (A0 bis A4) verbunden wird;

K Eingangsbusse (IB1 bis IB16), von denen jeder N Busleitungen aufweist, die mit N entsprechenden Eingangsschaltungsleitungen der K X N Eingangsschaltungsleitungen verbunden sind, und die Digitalsignale an die ersten Eingangsleitungen der Selektormodule (S1 bis S256) in einer entsprechenden Zeile liefert;

K X L erweiterte Busse (CB1 bis CB256), wobei jeder M Busleitungen aufweist und angeordnet ist, um die M Ausgangsleitungen (O1 bis O16) eines Selektormoduls (S1 bis S256) in jeder Zeile und in jeder Spalte mit den M zweiten Eingangsleitungen (C1 bis C16) eines Selektormoduls (S17 bis S256) in einer entsprechenden nächsten Zeile und derselben Spalte, die M Ausgangsleitungen (O1 bis O16) eines Selektormoduls (S241 bis S256) in einer letzten Zeile und jeder Spalte mit den M zweiten Eingangsleitungen (C1 bis C16) eines Selektormoduls (S1 bis S16) in einer ersten Zeile und einer entsprechenden nächsten Spalte, und M Ausgangsleitungen (O1 bis O16) eines Selektormoduls (S256) in der letzten Zeile und einer letzten Spalte mit den zweiten Eingangsleitungen (C1 bis C16) eines Selektormoduls (S1) in der ersten Zeile und einer ersten Spalte zu verbinden;

L Ausgangsbusse (OB1 bis OB16), wobei jeder M Busleitungen aufweist und angeordnet ist, um die M Ausgangsleitung eines Selektormoduls (S241 bis S256) in der letzten Zeile und jeder Spalte mit M entsprechenden Ausgangsschaltungsleitungen der L X M Ausgangsschaltungsleitungen (O1 bis O256) zum Liefern der Digitalsignalausgaben von den Selektormodulen (S241 bis S256) zu den Ausgangsschaltungsleitungen zu verbinden; und

Auswahlsteuerleitungen-Liefermittel zum Liefern der Auswahlsteuersignale an die K X L Selektormodule (S1 bis S256).

2. Die Digitalsignalaustauscheinrichtung gemäß Anspruch 1, ferner aufweisend in jeder der K X L Selektormodule (S1 bis S256):

N erste interne Eingangsleitungen (II1 bis II16), die parallel zueinander angeordnet sind und mit den N ersten Eingangsleitungen (I1 bis I16) verbunden sind,

M grundlegende Auswahlschaltungen (G1 bis G16), wobei jede eine zweite interne Eingangsleitung, die mit einer der M zweiten Eingangsleitungen (C1 bis C16) verbunden ist, eine interne Ausgangsleitung, die mit einer der M Ausgangsleitungen (O1 bis O16) verbunden ist, einen ersten Auswahlabschnitt (g1) zum Auswählen derjenigen der N ersten internen Eingangsleitungen (II1 bis II16), die auf eine turnusmäßige Weise gemäß einem ersten Auswahlsignal (AO bis A3) der Auswahlsteuersignale (AO bis A4) gekennzeichnet ist, und einen zweiten Auswahlabschnitt (g2) zum Auswählen derjenigen der ersten internen Eingangsleitungen, die durch den ersten Auswahlabschnitt (g1) ausgewählt wurde, und der zweiten internen Eingangsleitung, die durch das zweite Auswahlsignal (A4) der Auswahlsteuersignale (AO bis A4) gekennzeichnet ist, und zum Verbinden der ausgewählten Leitung mit der internen Ausgangsleitung, aufweist, und

Auswahlsignal-Liefermittel (ADD, L11 bis L116, L21 bis L216, ga1 bis ga16) zum Trennen der Auswahlsteuersignale von den Auswahlsteuersignal-Liefermitteln in erste und zweite Auswahlsignale und Liefern der ersten und zweiten Auswahlsignale an die ersten bzw. zweiten Auswahlabschnitte (g1, g2) der M grundlegenden Auswahlschaltungen (G1 bis G16).

3. Die Digitalsignalaustauscheinrichtung gemäß Anspruch 2, ferner umfassend in jedem der K X L Selektormodule (S1 bis S256):

Synchronisierungsmittel (g3) zum Bewirken, daß die Digitalsignale, die von den M grundlegenden Auswahlschaltungen (G1 bis G16) zu der Ausgangsleitung (O1 bis O16) abgeleitet wurden, miteinander synchronisiert sind.

4. Die Digitalsignalaustauscheinrichtung gemäß Anspruch 3, ferner umfassend in dem Synchronisierungsmittel (g3) der K X L Selektormodule (S1 bis S256):

Flipflops (F/F), die in die Ausgangsleitung (O1 bis O16) der M grundlegenden Auswahlschaltungen (G1 bis G16) eingefügt sind und durch einen gleichen Taktgeber angetrieben werden.

5. Die Digitalsignalaustauscheinrichtung gemäß Anspruch 2, wobei der erste Auswahlabschnitt (g1) der grundlegenden Auswahlschaltungen (G1 bis G16) durch eine Kombination von Auswahlelementen (g01 bis g15) aufgebaut ist, die ein Paar von Eingängen und einen einzigen Ausgang aufweisen.

6. Die Digitalsignalaustauscheinrichtung gemäß Anspruch 1, wobei die Selektormodule (S1 bis S256) als eine integrierte Schaltungsvorrichtung gebildet sind.

**7.** Die Digitalsignalaustauscheinrichtung gemäß Anspruch 2, ferner aufweisend in dem Auswahlsignal-Liefermittel der Selektormodule (S1 bis S256):

M erste Latch-Schaltungen (L11 bis L116), die den M grundlegenden Auswahlschaltungen (G1 bis G16) zugewiesen sind, zum Halten der an die M grundlegenden Auswahlschaltungen (G1 bis G16) gelieferten ersten und zweiten Auswahlsignale, und

M zweite Latch-Schaltungen (L21 bis L256), die den M grundlegenden Auswahlschaltungen (G1 bis G16) zugewiesen sind, und M zweite Latch-Schaltungen (L11 bis L116), jede zum Halten der ersten und zweiten Auswahlsignale (A0 bis A4) von einem entsprechenden der ersten Latch-Schaltungen (L11 bis L116), um die gehaltenen ersten und zweiten Auswahlsignale (A0 bis A4) an eine entsprechende der grundlegenden Auswahlschaltungen (G1 bis G16) zu liefern.

**8.** Die Digitalsignalaustauscheinrichtung gemäß Anspruch 2, ferner aufweisend in dem Auswahlsignal-Liefermittel der Selektormodule (S1 bis S256):

Steuersignal-Erzeugungsmittel (PC) zum Empfangen der ersten und zweiten Auswahlsignale (A0 bis A4) der von dem Auswahlsteuersignal-Liefermittel als ein paralleles Bitsignal gelieferten Auswahlsteuersignale, zum Erzeugen eines Paritätsbitsignals (P) aus dem parallelen Bitsignal und zum Kombinieren des Paritätsbitsignals mit den ersten und zweiten Auswahlsignalen (A0 bis A4), um ein Steuersignal zu erhalten;

M erste Latch-Schaltungen (L11 bis L116), die den M grundlegenden Auswahlschaltungen (G1 bis G16) zugewiesen sind, zum Halten von Steuersignalen (A0 bis A4, P), die von dem Steuersignal-Erzeugungsmittel (PC) an die grundlegenden Auswahlschaltungen (G1 bis G16) geliefert werden;

M zweite Latch-Schaltungen (L21 bis L216), die den M grundlegenden Auswahlschaltungen (G1 bis G16) zugewiesen sind, und M erste Latch-Schaltungen (L11 bis L116) zum Halten der Steuersignale von den ersten Latch-Schaltungen (L11 bis L116) bei einem gleichen Timing, und Liefern der ersten und zweiten Auswahlsignale (A0 bis A4) an die entsprechenden grundlegenden Auswahlschaltungen (G1 bis G16);

M erste Paritätsberechnungsschaltungen (PC1) zum Durchführen einer Paritätsprüfung auf der Basis der Steuersignale (A0 bis A4, P), die durch die ersten Latch-Schaltungen (L11 bis L116) gehalten werden, und zum Liefern eines Paritätsfehlersignales (PE1), wenn ein Fehler zu einer Zeit eines Paritätsprüfens erfaßt wird; und

M zweite Paritätsberechnungsschaltungen (PC2) zum Durchführen einer Paritätsprüfung auf der Basis der Steuersignale (A0 bis A4, P), die durch die zweiten Latch-Schaltungen (L21 bis L216) gehalten werden, und zum Liefern eines Paritätsfehlersignals (P2), wenn ein Fehler zu einer Zeit eines Paritätsprüfens erfaßt wird; und

wobei das Auswahlsignal-Liefermittel angeordnet ist, um Paritätsfehlersignale (PE1, PE2) zu Empfangen, die aus den ersten und zweiten Paritätsberechnungsschaltungen (PC1, PC2) erhalten wurden, und zum Liefern der ersten und zweiten Auswahlsignale (A0 bis A4) wieder an eine entsprechende grundlegende Auswahlschaltung.

## Revendications

**1.** Équipement de central pour des signaux numériques sensible à des signaux de commande de sélection externe (A0 à A4) pour raccorder sélectivement K X N (K, N : un nombre naturel) lignes de circuit d'entrée (I1 à I256) à L X M (L, M : un nombre naturel) lignes de circuit de sortie (O1 à O256), comprenant :

K X L modules de sélecteur (S1 à S256) disposés dans un réseau matriciel et ayant chacun N premières lignes d'entrée (I1 à I16), M secondes lignes d'entrée (C1 à C16), et M lignes de sortie (O1 à O16) assignées aux secondes lignes d'entrée (C1 à C16), pour forcer chaque ligne de sortie (O1 à O16) à être raccordées sélectivement à une des première et seconde lignes d'entrée correspondantes (I1 à I16, C1 à C16) selon les signaux de commande de sélection externe ($A_0$ à $A_4$);

K bus d'entrée (IB1 à IB16), dont chacun a N lignes de bus raccordées à N lignes de circuit d'entrée correspondantes de K X N lignes de circuit d'entrée, et fournit les signaux numériques aux premières lignes d'entrée des modules de sélecteur (S1 à S256) dans une rangée correspondante ;

K X L bus étendus (CB1 à CB256), ayant chacun M lignes de bus et disposés pour raccorder les M lignes de sortie (O1 à O16) d'un module de sélecteur (S1 à S256) dans chaque rangée et chaque colonne des M secondes lignes d'entrée (C1 à C16) d'un module de sélecteur (S17 à S256) dans une rangée suivante correspondante et la même colonne, les M lignes de sortie (O1 à O16) d'un module de sélecteur (S241 à S256) dans une dernière rangée et chaque colonne aux M secondes lignes d'entrée (C1 à C16) d'un module de sélecteur (S1 à S16) dans une première rangée et une colonne suivante correspondante, et M lignes de sortie (O1 à O16) d'un module de sélecteur (S256) dans la dernière rangée et une dernière colonne aux secondes lignes d'entrée (C1 à C16) d'un module de sélecteur (S1) dans la première rangée et une première colonne ;

L bus de sortie (OB1 à OB16) ayant chacun M lignes de bus et disposés pour raccorder les M lignes de sortie d'un module de sélecteur (S241 à S256) dans la dernière rangée et chaque colonne aux M lignes de circuit de sortie correspondant des L X M lignes de circuit de sortie (O1 à O256), pour fournir les signaux numériques fournis par les modules de sélecteur (S241 à S256) aux lignes de circuit de sortie ; et

un moyen de fourniture de lignes de commande de sélection pour fournir les signaux de commande de sélection aux K x L modules de sélecteur (S1 à S256).

2. Équipement de central pour des signaux numériques selon la revendication 1, comprenant en outre dans chacun des modules de sélecteur K X L (S1 à S256) :

N premières lignes d'entrée internes (II1 à II16) disposées en parallèle les unes avec les autres et raccordées aux N premières lignes d'entrée (I1 à I16),

M circuits de sélection fondamentaux (G1 à G16), ayant chacun une seconde ligne d'entrée interne raccordée à une des M secondes lignes d'entrée (C1 à C16), une ligne de sortie interne raccordée à une des M lignes de sortie (01 à 016), une première section de sélection (g1) pour sélectionner celle des N premières lignes d'entrée internes (II1 à II16) qui est désignée d'une façon en tournoi selon un premier signal de sélection (A0 à A3) des signaux de commande de sélection (A0 à A4), et une seconde section de sélection (g2) pour sélectionner celle de la première ligne d'entrée interne sélectionnée par la première section de sélection (g1) et la seconde ligne d'entrée interne qui est désignée par un second signal de sélection (A4) des signaux de commande de sélection (A0 à A4) et raccordant la ligne sélectionnée à la ligne de sortie interne, et

un moyen de fourniture de signal de sélection (ADD, L11 à L116, L21 à L216, ga1 à ga16) pour séparer les signaux de commande de sélection du moyen de fourniture de signal de commande de sélection en premier et second signaux de sélection et pour fournir les premier et second signaux de sélection aux première et seconde sections de sélection (g1, g2) des M circuits de sélection fondamentaux (G1 à G16), respectivement.

3. Équipement de central pour des signaux numériques selon la revendication 2, comprenant en outre dans chacun des K X L modules de sélecteur (S1 à S256) :

un moyen de synchronisation (g3) pour forcer les signaux numériques dérivés des M circuits de sélection fondamentaux (G1 à G16) à la ligne de sortie (O1 à O16) à se synchroniser les uns avec les autres.

4. Équipement de central pour des signaux numériques selon la revendication 3, comprenant en outre dans ledit moyen de synchronisation (g3) desdits K X L modules de sélecteur (S1 à S 256) :

des bascules (F/F) interposées dans les lignes de sortie (O1 à O16) desdits M circuits de sélection fondamentaux (G1 à G16) et commandées par une même horloge.

5. Équipement de central pour des signaux numériques selon la revendication 2, dans lequel ladite première section de sélection (g1) desdits circuits de sélection fondamentaux (G1 à G16) est constituée par une combinaison des éléments de sélection (g01 à g15) ayant une paire d'entrée et une sortie unique.

6. Équipement de central pour des signaux numériques selon la revendication 1, dans lequel lesdits modules de sélecteur (S1 à S16) sont formés comme un dispositif de circuit intégré.

7. Équipement de central pour des signaux numériques selon la revendication 2, comprenant en outre dans le moyen de fourniture de signal de sélection desdits modules de sélecteur (S1 à S256) :

M premiers circuits de verrouillage (L11 à L116) assignés aux M circuits de sélection fondamentaux (G1 à G16), pour maintenir les premier et second signaux de sélection fournis aux M circuits de sélection fondamentaux (G1 à G16), et

M seconds circuits de verrouillage (L21 à L256) assignés audits M circuits de sélection fondamentaux (G1 à G16) et M premiers circuits de verrouillage (L11 à L116), chacun pour maintenir les premier et second signaux de sélection (A0 à A4) à partir de celui correspondant des premiers circuits de verrouillage (L11 à L16) pour fournir les premier et second signaux de sélection maintenus (A0 à A4) à celui correspondant des circuits de sélection fondamentaux (G1 à G16).

8. Équipement de central pour des signaux numériques selon la revendication 2, comprenant en outre dans le moyen de fourniture de signal de sélection des modules de sélecteur (S1 à S256) :

un moyen de génération de signal de commande (PC) pour recevoir les premier et second signaux de sélection (A0 à A4) des signaux de commande de sélection fournis par ledit moyen de fourniture de signal de commande de sélection comme un signal binaire parallèle, pour générer un signal binaire de parité (P) à partir du signal binaire parallèle, et combinaison du signal binaire de parité avec les premier et second signaux de sélection (A0 à A4) pour obtenir un signal de commande ;

M premiers circuits de verrouillage (L11 à L116) assignés à M circuits de sélection fondamentaux (G1 à G16) pour maintenir des signaux de commande (A0 à A4, P) fournis par le moyen de génération de signal de commande (PC) à des circuits de sélection fondamentaux (G1 à G16) ;

M seconds circuits de verrouillage (L21 à L116) assignés aux M circuits de sélection fondamentaux (G1 à G16) et M premiers circuits de verrouillage (L11 à L116) pour maintenir les signaux de commande à partir des premiers circuits de verrouillage (L11 à L116) à la même temporisation, et pour délivrer les premier et second signaux de sélection (A0 à A4) aux circuits de sélection fondamentaux correspondants (G1 à G16) ;

M premiers circuits de calcul de parité (PC1) pour réaliser un contrôle de parité sur la base des signaux de commande (A0 à A4, P) maintenus par les premiers circuits de verrouillage (L11 à L116) et pour délivrer un signal d'erreur de parité (PE1) lorsqu'une erreur est détectée au moment du contrôle de parité ; et

M seconds circuits de calcul de parité (PC2) pour réaliser un contrôle de parité sur la base des signaux de commande (A0 à A4, P) maintenus par les seconds circuits de verrouillage (L21 à L216) et pour fournir un signal d'erreur de parité (PE2) lorsqu'une erreur est détectée en même temps qu'un contrôle de parité ; et

Dans lequel ledit moyen de fourniture de signal de sélection est disposé pour recevoir des signaux d'erreur de parité (PE1, PE21) obtenus à partir des premier et second circuits de calcul de parité (PC1, PC2) et pour fournir de nouveau des premier et second signaux de sélection (A0 à A4) aux circuits de sélection

fondamentaux correspondants.

F I G. 1

F I G. 2

F I G. 3

F I G. 4

EP 0 343 608 B1

F I G. 5

# F I G. 6

# F I G. 9

F I G. 7

EP 0 343 608 B1

F I G. 8